Europäisches Patentamt

(19) European Patent Office

Office européen des brevets

(11) Publication number: **0 229 097 B1**

# (12) EUROPEAN PATENT SPECIFICATION

(45) Date of publication of patent specification :
06.11.91 Bulletin 91/45

(51) Int. Cl.⁵ : **A61C 13/265, A61C 13/271**

(21) Application number : **86903523.8**

(22) Date of filing : **12.06.86**

(86) International application number :
**PCT/GB86/00336**

(87) International publication number :
**WO 86/07251 18.12.86 Gazette 86/27**

(54) DENTAL PROSTHETIC STRUCTURES AND CONNECTORS FOR USE IN SUCH PROSTHETIC STRUCTURES.

(30) Priority : **12.06.85 GB 8514897**
**21.10.85 GB 8525920**

(43) Date of publication of application :
**22.07.87 Bulletin 87/30**

(45) Publication of the grant of the patent :
**06.11.91 Bulletin 91/45**

(84) Designated Contracting States :
**AT BE CH DE FR GB IT LI LU NL SE**

(56) References cited :
**CH-A- 491 643**
**FR-A- 693 561**
**FR-A- 984 623**
**FR-A- 995 727**

(56) References cited :
**US-A- 1 614 325**
**US-A- 1 698 259**
**US-A- 2 350 196**
**US-A- 2 491 581**
**US-A- 2 705 366**
**US-A- 4 431 415**
**US-A-26 683 53**

(73) Proprietor : **SEATON, Peter**
**3 Trinity Street**
**Dorchester, Dorset DT1 1TT (GB)**

(72) Inventor : **SEATON, Peter**
**3 Trinity Street**
**Dorchester, Dorset DT1 1TT (GB)**

(74) Representative : **Gura, Henry Alan**
**MEWBURN ELLIS & CO. 2/3 Cursitor Street**
**London EC4A 1BQ (GB)**

## Description

This invention relates to improvements in or relating to the construction of both fixed and removable dental prosthetic structures, such as bridges and partial dentures.

A dental bridge comprises an artificial tooth or teeth, a so-called "pontic", supported on either side by a suitably prepared sound natural tooth called "an abutment tooth" in the art.

A number of different methods of providing a patient with a fixed dental bridge are currently in use, the majority of these methods involving a one-piece bridge construction made of a suitable dental material and incorporating the pontic and attachments for securing the pontic to the abutment teeth.

Providing the patient with a dental bridge by the known methods is achieved by first carrying out dental preparation work on the abutment teeth and then fabricating and installing the bridge construction consisting of the pontic and the appropriate attachments.

In one currently popular form of dental bridge, radical surgery is first carried out on both abutment teeth in order to form these into substantially parallel pillar - like structures which have a substantially constant cross-sectional area over a significant height. Once this surgery has been performed, casts are taken of the prepared abutment teeth for use in preparing cast sockets made of a dental metal for incorporating in the attachments of the dental bridge which is constructed as a unitary item consisting of the pontic and integrally cast attachments containing the metal sockets which fit accurately over the prepared abutment teeth. Installation of such a dental bridge is then performed by applying dental cement to the prepared abutment teeth and fitting the attachments of the dental bridge over the respective abutment teeth.

The preparation of the cast metal sockets and the unitary bridge construction including these involves a very high degree of skill, and additional difficulties are involved by the need for the attachments to be applicable to the prepared abutment teeth along parallel paths. The bridge itself is necessarily made and assembled in a laboratory by a skilled technician, so that each bridge is individually made and is a unique piece of high precision work.

Even more importantly, the unitary nature of the bridge described above also means that it can be subjected in use to considerable bending movements and is liable to fracture or become detached under the forces encountered in the mouth.

A further disadvantage of this known type of bridge is the fact that, in installing the bridge, the direction in which the attachments are applied to the prepared and cemented abutment teeth is also a direction along which significant forces are commonly experienced by the bridge, which is thus subjected to forces tending to dislodge it. The bridge can easily become detached as a result of loss of adhesion between it and its abutment teeth following shearing by these forces of the relatively thin layer of dental cement holding the abutment teeth and the bridge together.

Proposals have been made for a number of different forms of dental prosthetic constructions with a view to overcoming different ones of the disadvantages described.

In US 2668353, for example, the pontic of the bridge is cemented to the abutment tooth at one end and is attached to the abutment tooth at the other end by a connection comprising a sleeve fixed in the tooth on a plunger displaceable towards and away from that tooth, the plunger being rotatable in the sleeve about the axis of insertion. There is no provision for preventing the transmission of undesired loads from the pontic to the abutment teeth (a process that is referred to herein generally as "stress breaking") other than permitting relative movement through said connection between the pontic and the one abutment tooth along the line of the bridge. In all other respects, the pontic is essentially rigid with the abutment teeth, apart from being able to rotate on said connection about an axis along the line of the bridge, which is itself unimportant from the point of view of stress breaking.

In US 1921613, studs project from opposite ends of the pontic at an inclination to the line of the bridge and into boxes in the abutment teeth. The disclosure of US 1921613 states that each stud has a snug fit in its box but at the same time permits slight movement. This contradictory condition can be interpreted to mean that only minimal movements are permitted, which would have no appreciable stress breaking effect, or that larger movements are permitted in all directions, which would be uncomfortable for the wearer and also unsightly.

A further type of bridge shown in US 2705366 has a pontic cemented to one abutment tooth while a pin and socket joint is provided between the other abutment tooth and the pontic. The pin is required to be received with some looseness in the socket except that the joint prevents any movement of the abutment teeth away from each other. In effect, the pontic is cantilevered from the cemented abutment tooth and, with the exception of restriction of movement along the line of the bridge, the pin and socket joint only provides end limits for an otherwise completely free movement of the other end of the pontic. The constrain of movements along the line of the bridge severely limits any stress breaking effect the construction might provide, while the fixing of one end of the pontic combined with the general looseness of the other end would severely limit the support provided for the pontic by the connector.

It is an object of the present invention to avoid the disadvantages of these earlier forms of dental prosthetic constructions, and in particular to provide a construction that has improved stress breaking capabilities.

A dental prosthetic construction according to the invention, comprises a pontic and a connector to retain the pontic in an intended position adjacent to an abutment tooth, the connector having a first part including a limb attached to or for attachment to the pontic, and a second part defining a socket attached to the abutment tooth, with the joint portion of the limb fitting within the socket with a path of insertion which is substantially parallel to the dental arch containing the abutment tooth, the two connector parts having mutually contacting bearing surfaces so arranged as to permit translational movement of the pontic parallel to the path of insertion but prevent translational movements transverse to that path, said surfaces also permitting rotational movements of the pontic relative to the abutment tooth but excluding rotation about an axis extending the direction of said permitted translational movement.

Preferably, said limb of the connector is displaceable in the pontic to engage it with and withdraw it from the socket. A convenient arrangement employs a limb that is arcuate in form and is displaceable along its line of curvature to be inserted into the socket.

If the construction has connectors at both ends of the pontic allowing movements between the pontic and the adjacent abutment teeth, in contrast to said connector at one end, at the other end of the construction the connector may permit rotation of the pontic about an axis extending in the direction of said permitted translational movement at said one end.

According to another aspect of the invention, there is provided, for use in attaching a pontic to an abutment tooth, a dental prosthetic connector having a first part including a limb and a second part defining a socket into which the limb projects, bearing surfaces of the projecting portion of the limb and of the socket being mutually engaged to permit translational movement of the limb within the socket along a path of insertion of the limb into the socket, but prevent translational movements transverse to that path, said engagement of the bearing surfaces also permitting rotational movements of the limb relative to the socket but excluding rotation about an axis extending the direction of said permitted translational movement.

In a dental prosthetic construction according to the invention, that part of a connector attached to the abutment tooth may be secured to a restoration such as a crown or inlay, for fitting to the abutment tooth. The connector part may be attached to the restoration by embedding in a matrix of filler material in an oversized cavity within the restoration, or by other means, such as welding, soldering, integral casting, or the use of suitable bonding agents.

Locating devices may be provided to help align the limb of a connector with its socket during insertion and also to align a tool with an appropriate portion of the limb during removal of the prosthetic construction.

The socket parts of a socket and limb connector may have suitable cross-sectional shape, such as more or less rectangular or triangular shapes, which may be best suited to posterior teeth and incisor teeth respectively.

In order that the invention may be readily understood, embodiments thereof will now be described, by way of example, with reference to the accompanying drawings, in which:

Fig. 1 is a schematic longitudinal section through a pair of prepared abutment teeth supporting an installed dental bridge construction embodying the present invention;

Fig. 2 is a side view, with one side wall of a socket part removed, of bridge connector structure for a dental bridge construction embodying the invention;

Fig. 3 is a plan view, with a top wall of the socket part removed, of the bridge connector shown in Fig. 2;

Fig. 4 is a cross-sectional view of the connector taken on line X-X of Fig. 2;

Fig. 5 is a horizontal section through a removable dental bridge which is mounted between abutment teeth by two socket and limb connectors with curved limb parts, the bridge being shown with the limb parts engaged with the respective socket parts in the abutment teeth;

Fig. 6 is a similar view to Fig. 5, but with the limb parts of the connectors disengaged from their respective sockets;

Fig. 7 is a front view of a socket part of a socket and limb connector in accordance with another embodiment of the invention;

Fig. 8 is a partial vertical cross-sectional view of a prosthetic dental construction employing a connector having a socket part of the form shown in Fig. 7.

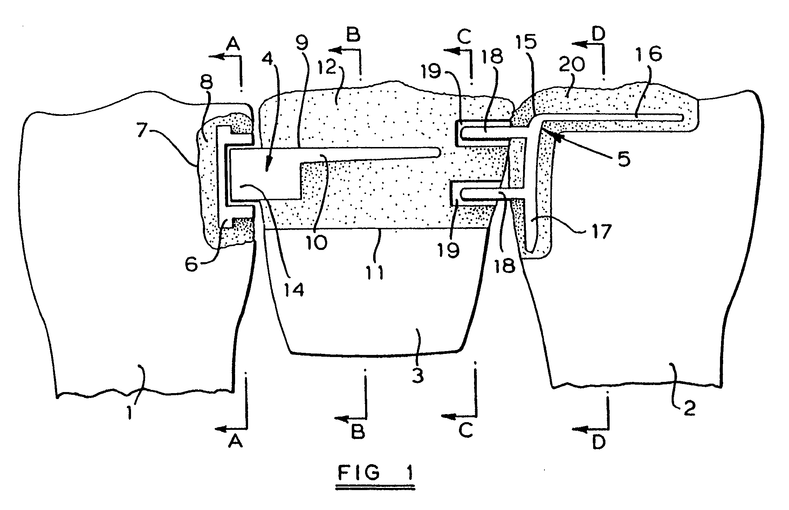

Referring now to the drawings, Fig. 1 shows a fixed dental bridge construction embodying the present invention, in which an artificial tooth or pontic 3 is supported in a gap between two abutment teeth 1 and 2 by respective bridge connectors 4 and 5.

The bridge connector 4 shown schematically in Fig. 1 comprises a socket part 6 which is embedded in a matrix of filler material 8 in an oversized and under-cut cavity 7 formed in a vertical surface of the abutment tooth 1. A limb part 9 of the connector 4 has a portion 10 at one end thereof received in a fixing cavity in the form of a slot 11 in the pontic 3, the portion 10 being embedded in a matrix of filler material 12. A joint portion 14 at the other end of the limb part 9 projects from the filler material 12 and fits into the socket part 6 with sufficient play to enable movement of the pontic 3 relative to the abutment tooth 1 for stress-breaking purposes.

The bridge connector 5 consists of a dihedral strip 15 having a horizontal arm 16 and a vertical arm 17. The strip 15 fits into an L-shaped surface groove cut for this purpose in adjacent surfaces of the abutment tooth 2. Fingers 18 formed integrally with the arm 17 of the strip 15 project into the slot of the pontic 3 where they are embedded in the matrix of filler material 20. Each of the fingers 18 is covered with a layer of resilient material 19.

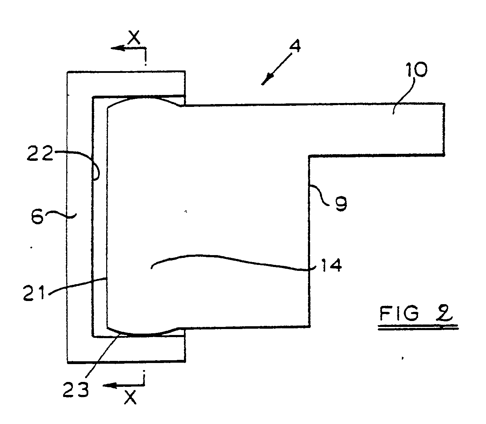

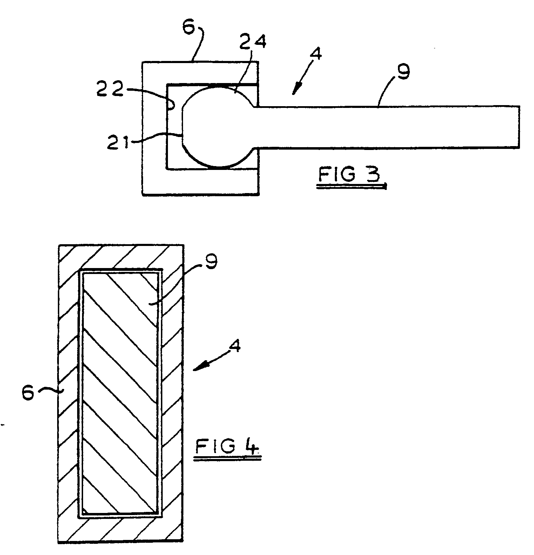

Figs. 2 to 4 show one example of a configuration which may be adopted in the case of the bridge connector 4. The limb part 9 of the connector 4 for embedding in the matrix of filler material 12 in the slot 11 of the pontic 3 has its projecting joint portion 14 fitting quite snugly into the socket part 6 in the abutment tooth with a flat end surface 21 of the joint portion 14 spaced from the floor 22 of the socket part 6. The bearing surfaces 23,24 of the joint portion 14 within the socket part 6 are rounded to form a kind of universal joint, permitting stress-breaking movement of the pontic 3 in the required directions, including longitudinally of the limb part 9, but precluding rotation around the longitudinal axis.

In some circumstances it may be desirable to provide a construction which permits rotational movement at one end of the pontic. In this case, one connector could be constructed as illustrated in Figs. 2 to 4 and the other connector could be of similar form but modified to permit such rotation about the longitudinal axis.

The bridge connector components can be standard items made of any suitable material, such as stainless steel or titanium or a composition including carbon fibres. The pontic may be made of dental metal or a non-metallic dental material. Those parts of a connector component which are to be covered by the filler material may also be treated, for example by having the surface thereof roughened, so as to make the filler material adhere to the component.

Whilst, in the above described embodiment, the connectors 4 and 5 are embedded in filler material in cavities in the abutment teeth and the pontic, it is envisaged that, in appropriate cases, a connector embodying the invention could be attached entirely or in part to a prepared surface of an abutment tooth. In such a case, a procedure such as acid etching may be used to prepare the surfaces of the tooth and connector to be attached to one another by filler material or the like placed between the surfaces.

It is envisaged that a range of different types and sizes of standard bridge connectors may be provided for different circumstances and a range of pontics may also be provided with suitable fixing cavities for use with the various connectors.

In providing a patient with a dental bridge construction as hereinbefore described, a dental procedure is first carried out to prepare the abutment teeth by forming the required cavities or otherwise preparing the teeth to receive the selected bridge connectors. The bridge construction is then installed by attaching the corresponding bridge connectors to the abutment teeth using the filler material, introducing the relevant portions of the bridge connectors into the groove of a selected pontic and filling the groove in the pontic with a matrix of filler material to embed and retain the connectors.

The bridge connectors can be ready made components which are not intended to fit accurately either the abutment tooth or the pontic. Consequently, high precision laboratory work is eliminated and the dental preparation work to enable the construction of such a bridge is simplified and does not involve carrying out radical and accurate surgery on the healthy abutment teeth.

The construction also allows a bridge connector to be so arranged that the path of withdrawal of the connector, or separation of its parts, is transverse to the forces encountered in the mouth, thereby reducing the chances of the pontic becoming detached from the abutment teeth. This construction further permits effective stress-breaking structures to be incorporated into the bridge with consequent reduction in the likelihood that the bridge will break. Moreover, the forces encountered in the mouth will not subject the bridge construction to shearing forces tending to break the connection between the bridge construction and abutment teeth as in the prior art, but will subject the structure to more readily resisted compression forces.

Whilst the above embodiment of the invention has been described with reference to fixed dental bridges, it is envisaged that, connectors embodying the invention could be used as denture retainers, provided a two-part connector structure is employed and the coupling of the connector parts is effected in a direction transverse to the forces encountered in the mouth. For example, the connector of Figs. 2 to 4 is thought to be specially suitable for use in the case where a denture is to be provided to replace teeth at the back of the mouth behind sound front teeth to which a connection can be made.

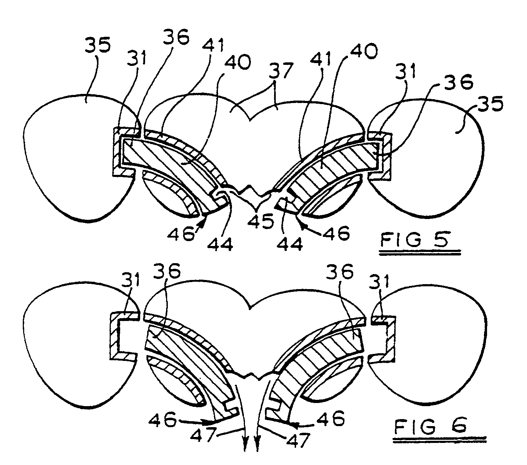

In the example of Figs. 5 and 6, connector limbs 40 have an arcuate shape and are slidably received in respective sleeves 41 in the pontic 37 to protrude their ends 36 into sockets 31 in the abutment teeth 35. The ends 46 of the limbs furthest from the ends 36 are more or less flush with the palatal surface of the pontic 37. Notches 45 in the pontic facilitate engagement of an actuating tool in notches 44 in the limbs.

Arrows 47 in Fig. 6 illustrate the direction of the force applied to retract the limbs from the sockets in the Fig. 5 embodiment. In this retracted condition of the limbs, the ends 46 now protrude from the surface of the pontic. Re-engagement of the limbs with the sockets 31 may be achieved either using a tool or by pressure on the ends 46 following alignment of the ends 36 with the sockets 31.

A curved connector limb has an advantage in that the end furthest from the joint may be situated at the surface of the pontic facing the tongue, cheek or chewing surface, where it is readily accessible.

End stops (not illustrated) may be provided in order to prevent movement of a sliding connector limb beyond determined limits, which would normally be fully engaged and fully retracted positions.

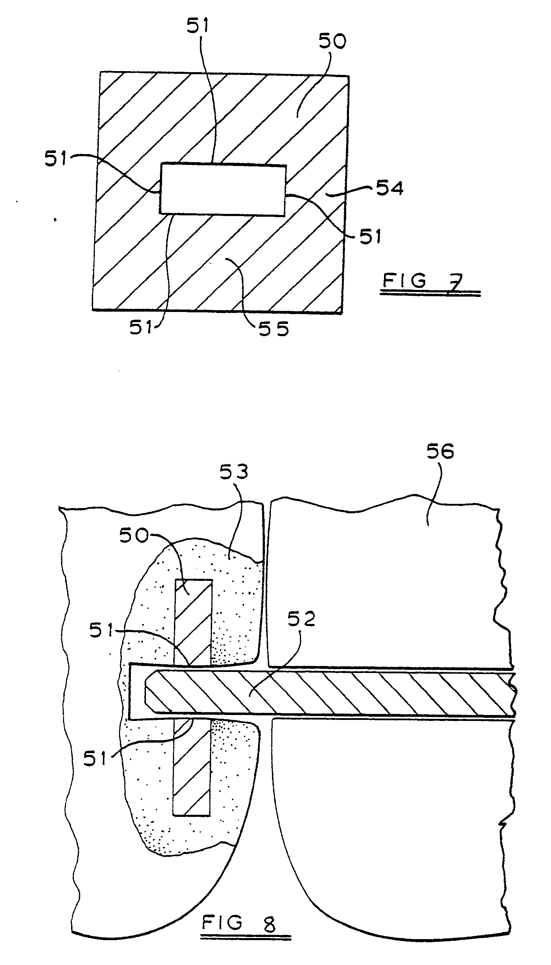

Referring now to Figs. 7 and 8 of the drawings, which illustrate a particularly simple embodiment of the present invention, a socket 50 of a connector for a dental prosthetic construction is fashioned from a sheet of material by forming a substantially rectangular aperture adapted to receive a connector limb 52 as shown in Fig. 8. The edges 51 of the aperture which are to support the limb 52 are shaped to allow for both a snug fit of the limb and limited stress-breaking movements. The socket is embedded in a matrix of filler material 53 in the abutment tooth. The connector limb 52 partially within the pontic 56, has a parallel-sided portion where it passes through the aperture of the socket part, the required limited stress-breaking movements in this case being provided by the shape of the socket, rather than of the limb.

The illustrated socket 50 has an essentially rectangular cross-section. This may be positioned in any convenient plane. For example, in posterior teeth, the longer side of the socket aperture would be horizontal, as illustrated. When used for incisor teeth, a more vertical arrangement may be advantageous.

In some embodiments of the present invention, all or parts of a connector socket may be constructed of filler material. For example, the side wall 54 or 55 could be omitted.

The limb and socket connectors described above are mainly intended to connect artificial teeth to adjacent natural ones. However, when dentures are to be constructed it is common practice to anchor artificial teeth to natural ones which may be some distance from the gap - the intervening space being spanned by a plate or a bar. Clasps and rests are commonly used for attachment but have many disadvantages. Limb and socket connectors could be used in many of these situations, the sockets being oriented with the long axis more or less parallel with the plane of the dental arch and facing a convenient direction - for instance, towards the palate. It is envisaged that the limbs would be mounted on movable arms - or the like-to enable engagement of the limbs and sockets.

Whilst the above described embodiments of the invention employ abutment tooth sockets defined by connector parts, it is envisaged that all or part of such sockets could be fashioned as suitably prepared cavities in the substance of the abutment tooth or in a matrix of filler material.

In those instances when it is desired to fit a slidable connector limb to a pontic in the laboratory, the socket part may be fitted to its abutment tooth either before or after the pontic is constructed.

## Claims

1. A dental prosthetic connector (4) for use in attaching a pontic (3) to an abutment tooth (1), which connector has a first part including a limb (9 or 40 or 52) and a second part defining a socket (6 or 31 or 50) into which the limb projects, bearing surfaces (23,24) of the projecting portion (14) of the limb and of the socket being mutually engaged to permit translational movement of the limb within the socket along a path of insertion of the limb into the socket, but prevent translational movements transverse to that path, characterised by said engagement of the bearing surfaces also permitting rotational movements of the limb relative to the socket but excluding rotation about an axis extending the direction of said permitted translational movement.

2. A connector according to claim 1 in which bearing surfaces of the limb (9) are rounded.

3. A connector according to claim 1 in which bearing surfaces of the limb (52) are parallel sided.

4. A connector according to any one of claims 1 to 3 in which the limb (40) is arcuate and displaceable in the pontic along its line of curvature to enable the joint portion of the connector limb to be introduced into and withdrawn from the socket (31).

5. A dental prosthetic construction comprising a pontic (3 or 37 or 56) and a connector (4) to retain the pontic in an intended positin adjacent to an abutment tooth (1 or 35), the connector (4) having a first part including a limb (9 or 40 or 52) attached to or for attachment to the pontic (3) and a second part defining a socket (6 or 31 or 50) attached to the abutment tooth, with the joint portion (14 or 36) of the limb fitting within the socket with a path of insertion which is substantially parallel to the dental arch containing the abutment tooth (1), the two connector parts having mutually contacting bearing surfaces (23,24) so arranged as to permit translational movement of the pontic parallel to the path of insertion but prevent translational movements transverse to that path, characterised by said surfaces also permitting rotational movements of the pontic relative to the abutment tooth but excluding rotation about an axis extending the direction of said permitted translational movement.

6. A construction according to claim 5 wherein the limb (40) is arcuate and displaceable in the pontic (37) along its line of curvature to engage it in and withdraw it from the socket.

7. A construction according to any one of claims 5 or claim 6 wherein the connection means (5) at the other end of the pontic permits rotation about an axis extending in said direction of permitted translational movement at said one end of the pontic.

## Patentansprüche

1. Zahnprothesenverbindungstück (4) zum Einsatz beim Befestigen einer Brücke (3) an einem angrenzenden bzw. einen Widerlager-Zahn (1), welches Verbindungsstück einen ersten, einen Arm bzw. ein Glied (9 oder 40 oder 52) einschließenden Teil und einen zweiten, eine Buchse (6 oder 31 oder 50) definierenden Teil aufweist, in die das Glied hineinragt, wobei Auflage- bzw. Stütz-Flächen (23,24) des vorspringenden Abschnitts (14) des Glieds und jene der Buchse ineinandergreifen, um Translations-Bewegung des Glieds innerhalb der Buchse entlang eines Einfügungswegs des Glieds in die Buchse zu erlauben, aber Translations-Bewegungen in Querrichtung zu diesem Weg zu verhindern, dadurch gekennzeichnet, daß das genannte Ineinandergreifen der Auflage- bzw. Stütz-Flächen auch Rotationsbewegungen des Glieds relativ zur Buchse erlaubt, aber Rotation um eine die Richtung der genannten erlaubten Translations-Bewegung verlängernde Achse ausschließt.

2. Verbindungsstück nach Anspruch 1, bei dem Auflage- bzw. Stütz-Flächen des Glieds (9) gerundet sind.

3. Verbindungsstück nach Anspruch 1, bei dem Auflage- bzw. Stütz-Flächen des Glieds (52) parallelseitig sind.

4. Verbindungsstück nach einem der Ansprüche 1 bis 3, bei dem das Glied (40) gebogen bzw. gekrümmt und entlang der Krümmungslinie in der Brücke verlagerbar ist, um das Einbringen des Verbindungsabschnittes des Verbindungsgliedes in und sein Herausziehen aus der Buchse (31) zu ermöglichen.

5. Zahnprothesenkonstruktion, umfassend eine Brücke (3 oder 37 oder 56) und ein Verbindungsstück (4), um die Brücke in einer beabsichtigten Position in Nachbarschaft eines angrenzenden bzw. Widerlager-Zahnes (1 oder 35) zu halten, wobei das Verbindungsstück (4) einen ersten Teil aufweist, der ein an der Brücke (3) befestigtes oder zur Befestigung daran vorgesehenes Glied (9 oder 40 oder 52) einschließt, sowie einen zweiten Teil, der eine am angrenzenden bzw. Widerlager-Zahn befestigte Buchse (6 oder 31 oder 50) definiert, mit dem Verbindungsabschnitt (14 oder 36) des Gliedes in die Buchse passend, mit einem Einsetzweg, der im wesentlichen zum Zahnbogen parallel ist, der den angrenzenden bzw. Widerlager-Zahn (1) enthält, wobei die beiden Verbindungsteile einander berührende Auflage- bzw. Stütz-Flächen (23,24) aufweisen, die so angeordnet sind, daß sie eine Translations-Bewegung der Brücke parallel zum Einführweg erlauben aber Translations-Bewegungen in Querrichtung zu diesem Weg verhindern, dadurch gekennzeichnet, daß die genannten Flächen auch Rotationsbewegungen der Brücke relativ zum angrenzenden bzw. Widerlager-Zahn erlauben, aber Rotation um eine die Richtung der genannten erlaubten Translations-Bewegung verlängernde Achse ausschließen.

6. Konstruktion nach Anspruch 5, worin das Glied (40) gebogen bzw. gekrümmt und entlang der Krümmungslinie in der Brücke (37) verlagerbar ist, um es in die Buchse eingreifen zu lassen und aus ihr herauszuziehen.

7. Konstruktion nach Anspruch 5 oder 6, worin die Verbindungseinrichtung (5) am anderen Ende der Brücke Rotation um eine sich in genannter Richtung der erlaubten Translations-Bewegung am genannten einen Ende der Brücke erstreckende Achse erlaubt.

## Revendications

1. Elément de liaison prothétique dentaire (4) destiné à être utilisé pour attacher un pontique (3) à une dent pilier (1), lequel élément de liaison comporte une première partie incluant un membre (9 ou 40 ou 52) et une seconde partie définissant une douille (6 ou 31 ou 50) dans laquelle le membre se projette, des surfaces d'appui (23,24) de la partie en saillie (14) du membre et de la douille étant engagées mutuellement pour permettre le mouvement de translation du membre à l'intérieur de la douille, le long d'un trajet d'insertion du membre dans la douille, mais empêcher les mouvements de translation transversaux à ce trajet, caractérisé en ce que ledit engagement des surfaces d'appui permet également les mouvements rotationnels du membre par rapport à la douille mais exclut la rotation autour d'un axe s'étendant dans la direction dudit mouvement de translation permis.

2. Elément de liaison selon la revendication 1, dans lequel les surfaces de support du membre (9) sont arrondies.

3. Elément de liaison selon la revendication 1, dans lequel les surfaces de support du membre (52) ont des côtés parallèles.

4. Elément de liaison selon l'une quelconque des revendications 1 à 3, dans lequel le membre (40) est arqué et mobile dans le pontique le long de sa ligne de courbe pour permettre à la partie d'articulation du membre de l'élément de liaison d'être introduite dans et tirée de la douille (31).

5. Construction prothétique dentaire comprenant un pontique (3 ou 37 ou 56) et un élément de liaison (4) pour retenir le pontique dans une position souhaitée au voisinage d'une dent pilier (1 ou 35), l'élément de liaison (4) ayant une première partie incluant un membre (9 ou 40 ou 52) reliée ou pour attachement au pontique (3) et une seconde partie définissant une douille (6 ou 31 ou 50) reliée à la dent pilier, avec la partie d'articulation (14 ou 36) du membre s'ajustant dans la douille avec un trajet d'insertion qui est sensiblement parallèle à l'arc dentaire contenant la dent pilier (1), les deux parties d'élément de liaison ayant des surfaces de support mutuellement en contact (23,24) arrangées de façon à permettre le mouvement de translation du pontique parallèlement au trajet d'insertion mais à empêcher les mouvements de translation transversaux à ce trajet, caractérisée en ce que lesdites surfaces permettent également les mouvements rotationnels du pontique par rapport à la dent pilier mais excluant la rotation autour d'un axe prolongeant la direction dudit mouvement de translation permis.

6. Construction selon la revendication 5, dans laquelle le membre (40) est arqué et mobile dans le pontique (37) le long de sa ligne de courbe pour s'engager dans et se retirer de la douille.

7. Construction selon l'une quelconque des revendications 5 ou 6, dans laquelle le moyen de liaison (5) à l'autre extrémité du pontique permet la rotation autour d'un axe s'étendant dans ladite direction de mouvement de translation permis à ladite extrémité du pontique.

FIG 1

FIG 2

FIG 3

FIG 4

FIG 5

FIG 6

FIG 7

FIG 8